# FASCICULE DE BREVET EUROPEEN

(11) **EP 2 926 437 B1**
(45) Date de publication et mention de la délivrance du brevet: **02.01.2019**
(21) Numéro de dépôt: 13818677.0
(22) Date de dépôt: 28.11.2013
(51) Int. Cl.: H02K 1/27

(54) **ROTOR DE MOTEUR ELECTRIQUE A MANCHON EXTERIEUR FORME PAR ENROULEMENT, PROCEDE DE FABRICATION D'UN TEL ROTOR ET MOTEUR ELECTRIQUE COMPRENANT UN TEL ROTOR**
ROTOR EINES ELEKTRISCHEN MOTORS MIT GEWICKELTER ÄUSSERER HÜLSE, VERFAHREN ZUR HERSTELLUNG SOLCH EINES ROTORS UND ELEKTROMOTOR MIT SOLCH EINEM ROTOR
ROTOR OF AN ELECTRIC MOTOR, WITH AN OUTER SLEEVE FORMED BY WINDING, METHOD FOR PRODUCING SUCH A ROTOR, AND ELECTRIC MOTOR COMPRISING SUCH A ROTOR

(30) Priorité: 28.11.2012 FR 1203214
(43) Date de publication de la demande: 07.10.2015
(73) Titulaire: Safran Electronics & Defense, 92100 Boulogne-Billancourt (FR)
(72) Inventeur: RABRET, Bernard, F-92100 Boulogne-Billancourt (FR); ANDRE, Bruno, F-92100 Boulogne-Billancourt (FR); PRINCAY, Gaëtan, F-92100 Boulogne-Billancourt (FR); PIATON, Jérôme, F-92100 Boulogne-Billancourt (FR); BESSEDE, Thierry, F-92100 Boulogne-Billancourt (FR)
(74) Mandataire: Lavialle, Bruno François Stéphane
(86) Numéro de dépôt international: PCT/EP2013/074987
(87) Numéro de publication internationale: WO 2014/083114

(56) Documents cités:
- EP-A2- 1 978 620
- DE-U1- 8 427 704
- JP-A- S6 173 559
- JP-A- S57 177 263
- JP-A- S59 148 555
- US-A- 4 638 200
- US-A1- 2003 193 255
- US-A1- 2008 093 945

## Description

La présente invention concerne un rotor de moteur électrique à aimants permanents, un procédé de fabrication d'un tel rotor et un moteur électrique comportant un tel rotor.

Il est connu des rotors de moteurs électriques qui comprennent un noyau métallique en périphérie duquel sont fixés des aimants permanents. Les aimants permanents sont par exemple collés sur le noyau métallique.

Afin d'éviter que les efforts subis par les aimants, notamment du fait de la force centrifuge, n'arrachent les aimants du noyau métallique, il est prévu de recouvrir les aimants par un manchon en acier, également appelé frette, enserrant le noyau et les aimants. Pour garantir le serrage procuré par le manchon, il est nécessaire de rectifier le rotor et les aimants et d'usiner précisément le diamètre interne du manchon. En outre, comme l'épaisseur du manchon va conditionner l'entrefer entre le rotor et le stator, il est nécessaire de reprendre le diamètre extérieur du manchon par un usinage une fois le manchon en place sur le noyau et les aimants.

Le document US-A-4930201 expose qu'un tel manchon présente les inconvénients d'augmenter l'inertie du rotor et de faciliter la circulation de courants de Foucault dans le moteur. Ce document propose de remplacer le manchon en acier par un manchon formé par un enroulement d'un fil de fibres de verre, d'aramide ou d'époxy, qui est noyé dans une résine. Selon ce document, le manchon ainsi formé présente plusieurs avantages :
- il a une inertie plus faible que le manchon en acier,
- il n'est pas conducteur et ne permet donc pas la circulation des courants de Foucault,
- le manchon a un coefficient de dilatation thermique plus faible que le noyau de sorte que l'échauffement du rotor va entraîner une augmentation de l'effort de serrage exercé par le manchon sur le noyau.

Il apparaît que cet agencement présente cependant l'inconvénient d'être délicat à mettre en oeuvre. En effet, le fil est pré-imprégné de la résine sous forme liquide ou visqueuse, ce qui rend sa manipulation difficile. Il est possible de disposer la résine après l'enroulement du fil mais ceci ajoute une étape supplémentaire et oblige à s'assurer de la répartition homogène de la résine sur la totalité de la surface et de l'épaisseur du manchon.

Les documents JPS6173559 et DE 84 27 704U U1 décrivent un rotor d'aimants permanents fixé par un fil enroulé autour.

Un but de l'invention est de proposer un rotor qui soit facile à réaliser.

L'invention résulte de la transposition d'une technique de bobinage, utilisée classiquement pour la fabrication des bobines d'induction ou d'excitation, à la fabrication de manchons de rotors de moteurs électriques.

Classiquement, pour fabriquer de telles bobines, on utilise un fil métallique conducteur recouvert d'une couche électriquement isolante elle-même recouverte d'une gaine de matériau thermo-adhérent sous forme solide. Le fil est enroulé autour d'une armature pour former des spires jointives puis est chauffé de manière que le matériau thermo-adhérent des spires adjacentes polymérise et assure la fixation des spires les unes aux autres.

Selon l'invention, on prévoit, un rotor de moteur électrique, comprenant un noyau, des aimants fixés en périphérie du noyau, et un fil enroulé à spires jointives autour du noyau et des aimants, caractérisé en ce que le fil comprend une âme métallique entourée d'une couche électriquement isolante elle-même recouverte d'une gaine extérieure en matériau thermo-adhérent, les spires étant fixées les unes aux autres par adhérence des portions de gaine extérieure en contact les unes avec les autres et au moins une extrémité du fil étant engagée dans au moins un orifice ménagé dans le noyau.

L'invention a également pour objet un procédé de fabrication d'un rotor de moteur électrique, comprenant les étapes de :
- fixer des aimants en périphérie d'un noyau du rotor,
- enrouler à spires jointives un fil autour des aimants et du noyau, le fil comprenant une âme métallique entourée d'une couche électriquement isolante elle-même recouverte d'une gaine extérieure en matériau thermo-adhérent sous forme solide,
- chauffer le fil pour fixer les spires les unes aux autres par adhérence des portions de gaine extérieure en contact les unes avec les autres et assujettir au moins une extrémité du fil au noyau.

L'invention concerne aussi un moteur électrique comportant un stator définissant un logement recevant à rotation un tel rotor.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en coupe transversale d'un moteur électrique conforme à l'invention,
- la figure 2 est une vue schématique partielle en coupe longitudinale de ce moteur,
- la figure 3 est vue de détail agrandie de la zone III de la figure 2,
- la figure 4 est vue analogue à la figure 3 selon une variante de réalisation,
- la figure 5 est une vue schématique partielle et en coupe longitudinale d'un premier mode alternatif de finition de l'enroulement,
- la figure 6 est une vue schématique partielle et en coupe longitudinale d'un deuxième mode alternatif de finition de l'enroulement,
- la figure 7 est une vue schématique partielle et en coupe longitudinale d'un troisième mode alternatif de finition de l'enroulement.

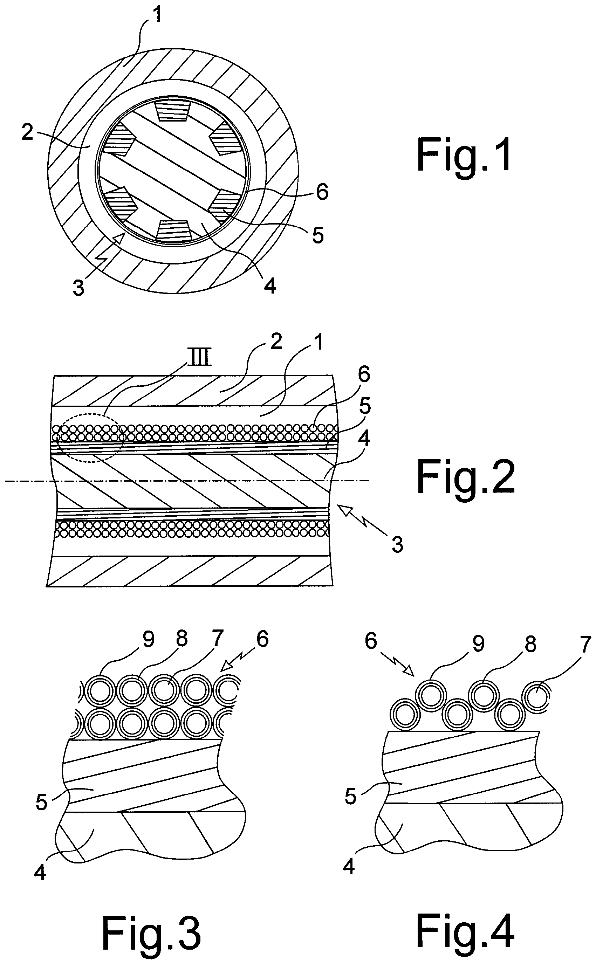

En référence aux figures 1 à 3, le moteur électrique de l'invention comprend un stator 1, connu en lui-même, comportant une armature de conduction d'un flux magnétique. L'armature délimite un logement 2 recevant à pivotement un rotor généralement désigné en 3.

Le rotor 3 comprend un noyau 4 sensiblement cylindrique et des aimants 5, permanents, fixés en périphérie du noyau 4. Les aimants 5 sont fixés par collage dans des encoches périphériques du noyau 4. Cet agencement du noyau 4 et des aimants 5 est connu en lui-même.

Le rotor 3 comprend en outre un fil 6 qui est enroulé à spires jointives autour du noyau 4 et des aimants 5 pour former un manchon de maintien des aimants 5 sur le noyau 4. Le fil 6 est ici enroulé sur deux couches, les spires étant jointives deux à deux au sein de chaque couche mais également d'une couche à l'autre. Le pas d'enroulement est donc égal au diamètre externe du fil 6. La tension du fil 6 est telle que le fil 6 est serré sur le noyau 4 et les aimants 5.

Le fil 6 comprend une âme métallique 7 entourée d'une couche électriquement isolante 8 elle-même recouverte d'une gaine extérieure 9 en matériau thermo-adhérent sous forme solide. Les spires formées par le fil 6 sont fixées les unes aux autres par adhérence des portions de gaine extérieure en contact les unes avec les autres. Le fil 6 a par exemple un diamètre externe de 0,1 mm avec une couche électriquement isolante 8 et une gaine extérieure 9 ayant chacune une épaisseur de quelques micromètres. L'âme métallique 7 est ici en acier amagnétique. Ce matériau est avantageux car le noyau 4 est lui-même constitué d'acier de sorte que le fil 6 et le noyau 4 ont des coefficients de dilation identiques : il n'y a pas à tenir compte d'une éventuelle dilatation différentielle pour déterminer la tension du fil 6.

Le fil 6 a des extrémités simplement appliquées contre le noyau 4 et fixées par adhérence des portions de gaine externe 9 en regard.

Le manchon ainsi formé assure le maintien des aimants 5 sur le noyau 4. Bien que l'âme métallique 7 du fil 6 soit électriquement conductrice, le fil 6 ne conduit pas de courants de Foucault du fait de la gaine électriquement isolante 8.

Le rotor de l'invention est fabriqué par la mise en oeuvre d'un procédé de fabrication comprenant les étapes de :
- fixer, ici par collage, les aimants 5 en périphérie du noyau 4,
- enrouler à spires jointives le fil 6 autour des aimants 5 et du noyau 4,
- chauffer le fil 6 pour polymériser le matériau thermo-adhérent de la gaine extérieure 9 et fixer les spires les unes aux autres par adhérence des portions de gaine extérieure 9 en contact les unes avec les autres.

L'enroulement du fil 6 est réalisé dans une machine de bobinage. Comme le matériau thermo-adhérent de la gaine externe 9 se présente sous forme solide ou sèche, la manipulation du fil 6 est aisée, notamment au sein de la machine de bobinage.

Le chauffage est réalisé par effet Joule en faisant passer, dans l'âme métallique 7 du fil 6, un courant électrique d'intensité adaptée. Le chauffage est ici réalisé directement dans la machine de bobinage immédiatement après la fin du bobinage. Le chauffage provoque la polymérisation du matériau thermo-adhérent qui provoque un collage des portions de gaine extérieure 9 en contact les unes avec les autres. Dans une moindre mesure, ceci entraîne également un collage des spires contre le noyau 4.

Dans la variante de la figure 4, le fil 6 est enroulé sur deux couches et les spires ne sont pas jointives au sein de chaque couche. En revanche, les spires sont jointives d'une couche à l'autre, chaque spire de la couche extérieure étant supportée par deux spires adjacentes de la couche inférieure. Le pas d'enroulement doit donc être supérieur au diamètre externe du fil 6 et inférieur à deux fois le diamètre du fil 6.

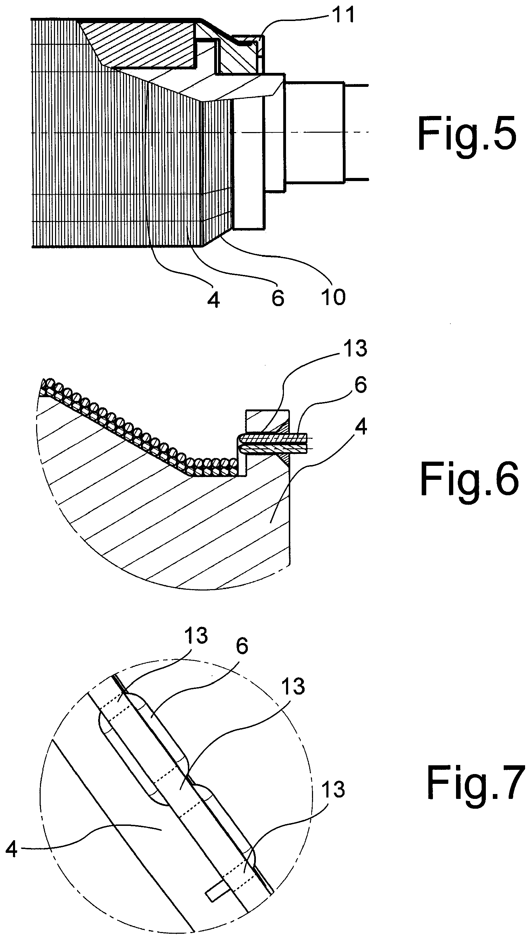

Pour les variantes de réalisation des figures 5 à 7, le procédé comprend une étape supplémentaire d'assujettissement d'au moins une extrémité du fil 6 au noyau 4. L'assujettissement des extrémités du fil 6 permet d'éviter que les extrémités de fil 6 ne s'étendent en saillie du rotor 3. Ceci facilite les manipulations du rotor 3 et garantit une bonne maîtrise du diamètre maximal du rotor 3.

En référence à la figure 5, les extrémités du fil 6 sont appliquées contre une partie tronconique 10 du noyau 4 et un capot 11 sous la forme d'une bague ayant une surface interne 12 tronconique est fixé sur la partie tronconique 10 pour recouvrir les extrémités du fil 6. En variante, il peut y avoir un capot 11 pour chaque extrémité du fil 6, en particulier lorsque le nombre de couches est impair et les extrémités du fil 6 s'étendent chacune à une extrémité de l'enroulement.

En référence à la figure 6, chacune des extrémités du fil 6 est engagée dans un orifice 13 ménagé dans le noyau 4. L'orifice 13 peut être débouchant ou non.

En référence à la figure 7, chacune des extrémités du fil 6 est engagée dans trois orifices 13 ménagés dans le noyau 4 de manière à être adjacents les uns aux autres. Au moins deux des orifices 13 sont débouchants et l'extrémité du fil 6 passe dans les orifices 13 et est entrelacée entre les orifices 13 de manière à pouvoir réaliser un genre de couture assurant un assujettissement de l'extrémité de fil 6.

Bien entendu, l'invention n'est pas limitée aux modes de réalisation décrits mais englobe toute variante entrant dans le champ de l'invention telle que définie par les revendications.

En particulier, l'âme métallique 7 peut être dans un autre métal que l'acier et par exemple en aluminium ou en cuivre. L'âme métallique 7 peut également être réalisée en acier magnétique en particulier lorsque les aimants ont une dimension circonférentielle relativement importante limitant les pertes aux interfaces : il est possible d'avoir un petit entrefer entre la partie magnétique la plus à l'extérieur du rotor 3 (à savoir le fil 6) et le stator 1.

Le fil 6 peut être enroulé sur une couche seulement ou sur plus de deux couches.

Le capot 11 peut avoir une autre forme que celle décrite.

Le chauffage du fil 6 peut également être réalisé par rayonnement infrarouge, soufflage d'air chaud ou autre.

Le chauffage du fil 6 peut être réalisé sur la machine de bobinage ou après que le noyau 4 entouré du fil 6 a été extrait de la machine de bobinage. Dans ce dernier cas, il est nécessaire de prévoir un maintien des extrémités du fil 6 pour éviter que celui-ci ne se déroule avant le chauffage.

## Revendications

1. Rotor (3) de moteur électrique, comprenant un noyau (4), des aimants (5) fixés en périphérie du noyau (4), et un fil (6) enroulé à spires jointives autour du noyau (4) et des aimants (5), le fil (6) comprend une âme métallique (7) entourée d'une couche électriquement isolante (8) elle-même recouverte d'une gaine extérieure (9) en matériau thermo-adhérent, les spires étant fixées les unes aux autres par adhérence des portions de gaine extérieure (9) en contact les unes avec les autres **caractérisé par** au moins une extrémité du fil (6) étant engagée dans au moins un orifice (13) ménagé dans le noyau (4).

2. Rotor selon la revendication 1, dans lequel l'âme métallique (7) est en acier.

3. Rotor selon la revendication 2, dans lequel l'acier est amagnétique.

4. Rotor selon la revendication 1, dans lequel au moins un capot (11) est fixé sur le noyau (4) pour recouvrir au moins une extrémité du fil (6).

5. Rotor selon la revendication 4, dans lequel l'extrémité du fil (6) est appliquée contre une partie tronconique (10) du noyau (4) et le capot (11) a la forme d'une bague ayant une surface interne (12) tronconique fixée sur la partie tronconique (10) pour recouvrir l'extrémités du fil (6).

6. Rotor selon la revendication 1, dans lequel au moins une extrémité du fil (6) est engagée dans une pluralité d'orifices (13) ménagés dans le noyau (4).

7. Procédé de fabrication d'un rotor de moteur électrique, comprenant les étapes de :
- fixer des aimants en périphérie d'un noyau du rotor,
- enrouler à spires jointives un fil autour des aimants et du noyau, le fil comprenant une âme métallique entourée d'une couche électriquement isolante elle-même recouverte d'une gaine extérieure en matériau thermo-adhérent sous forme solide,
- chauffer le fil pour fixer les spires les unes aux autres par adhérence des portions de gaine extérieure en contact les unes avec les autres **caractérisé par** assujettir au moins une extrémité du fil au noyau.

8. Procédé selon la revendication 7, dans lequel le chauffage est réalisé par effet Joule en faisant passer un courant électrique dans l'âme métallique du fil.

9. Procédé selon la revendication 7, dans lequel l'enroulement est réalisé dans une machine de bobinage et le chauffage est réalisé dans la machine de bobinage.

10. Moteur électrique comportant un stator délimitant un logement recevant à rotation un rotor conforme à l'une quelconque des revendications 1 à 6.

## Patentansprüche

1. Rotor (3) eines Elektromotors, umfassend einen Kern (4), Magnete (5), die am Umfang des Kerns (4) befestigt sind, sowie einen Draht (6), der mit aneinander liegenden Windungen um den Kern (4) und die Magnete (5) gewickelt ist, wobei der Draht (6) einen Metallkern (7) umfasst, der von einer elektrisch isolierenden Schicht (8) umgeben ist, die selbst von einem äußeren Schlauch (9) aus thermoklebendem Material überzogen ist, wobei die Windungen aneinander durch Kleben von miteinander in Kontakt stehenden Abschnitten des Außenschlauchs (9) aneinander befestigt sind, **dadurch gekennzeichnet, dass** mindestens ein Ende des Drahtes (6) in mindestens eine in dem Kern (4) ausgebildete Öffnung (13) eingreift.

2. Rotor nach Anspruch 1, bei dem der Metallkern (7) aus Stahl ist.

3. Rotor nach Anspruch 2, bei dem der Stahl nichtmagnetisch ist.

4. Rotor nach Anspruch 1, bei dem mindestens eine Abdeckung (11) an dem Kern (4) befestigt ist, um mindestens ein Ende des Drahtes (6) abzudecken.

5. Rotor nach Anspruch 4, bei dem das Ende des Drahtes (6) an einem kegelstumpfförmigen Teil (10) des Kerns (4) anliegt und die Abdeckung (11) die Form eines Ringes hat, der eine kegelstumpfförmige Innenfläche (12) hat, die an dem kegelstumpfförmigen Teil (10) befestigt ist, um die Enden des Drahtes (6) abzudecken.

6. Rotor nach Anspruch 1, bei dem mindestens ein Ende des Drahtes (6) in eine Vielzahl von Öffnungen (13) eingreift, die in dem Kern (4) ausgebildet sind.

7. Verfahren zum Herstellen eines Rotors eines Elektromotors, umfassend die Schritte:
- Befestigen von Magneten am Umfang eines Kerns des Rotors,
- Wickeln eines Drahtes mit aneinander liegenden Windungen um die Magneten und den Kern, wobei der Draht einen Metallkern umfasst, der von einer elektrisch isolierenden Schicht umgeben ist, die selbst von einem äußeren Schlauch aus thermoklebendem Material in fester Form überzogen ist,
- Erwärmen des Drahtes, um die Windungen aneinander durch Kleben der miteinander in Kontakt stehenden Abschnitte des Außenschlauchs zu befestigen, **dadurch gekennzeichnet, dass** es den Schritt des Befestigens mindestens eines Endes des Drahtes am Kern umfasst.

8. Verfahren nach Anspruch 7, bei dem die Erwärmung mittels Joule-Effekt erfolgt, indem man einen elektrischen Strom durch den Metallkern des Drahtes laufen lässt.

9. Verfahren nach Anspruch 7, bei dem das Umwickeln in einer Wickelmaschine erfolgt und das Erwärmen in der Wickelmaschine durchgeführt wird.

10. Elektromotor, umfassend einen Stator, der eine Aufnahme begrenzt, die einen Rotor gemäß einem der Ansprüche 1 bis 6 drehbar aufnimmt.

## Claims

1. An electric motor rotor (3) comprising a magnetic core (4), magnets (5) fastened to the periphery of the magnetic core (4), and a wire (6) wound with touching turns around the magnetic core (4) and the magnets (5), the wire (6) comprises a metal core (7) surrounded by an electrically insulating layer (8), itself covered by an outer sheath (9) of thermo-adhesive material, the turns being fastened to one another by adhesion between mutually contacting portions of the outer sheath (9), **characterized in that** at least one end of the wire (6) is engaged in at least one orifice (13) formed in the magnetic core (4).

2. A rotor according to claim 1, wherein the metal core (7) is made of steel.

3. A rotor according to claim 2, wherein the steel is non-magnetic.

4. A rotor according to claim 1, wherein at least one cap (11) is fastened on the magnetic core (4) in order to cover at least one end of the wire (6).

5. A rotor according to claim 4, wherein the end of the wire (6) is pressed against a frustoconical portion (10) of the magnetic core (4) and the cap (11) is in the form of a ring having a frustoconical inside surface (12) fastened to the frustoconical portion (10) so as to cover the ends of the wire (6).

6. A rotor according to claim 1, wherein at least one end of the wire (6) is engaged in a plurality of orifices (13) arranged in the magnetic core (4).

7. A method of fabricating an electric motor rotor, the method comprising the steps of:
• fastening magnets to the periphery of a magnetic core of the rotor;
• winding touching turns of a wire around the magnets and the magnetic core, the wire comprising a metal core surrounded by an electrically insulating layer, itself covered by an outer sheath of thermo-adhesive material in solid form; and
• heating the wire to fasten the turns to one another by adhesion between mutually contacting portions of outer sheath **characterized in that** it comprises the step of securing at least one end of the wire to the magnetic core.

8. A method according to claim 7, wherein the heating is performed by the Joule effect by causing the metal core of the wire to pass electric current.

9. A method according to claim 7, wherein both the winding and the heating are performed in the winding machine.

10. An electric motor comprising a stator defining a housing that rotatably receives a rotor in accordance with any one of claims 1 to 6.
